# EUROPÄISCHE PATENTSCHRIFT

(11) **EP 3 164 694 B1**
(45) Veröffentlichungstag und Bekanntmachung des Hinweises auf die Patenterteilung: **25.12.2019**
(21) Anmeldenummer: 15739021.2
(22) Anmeldetag: 29.06.2015
(51) Int. Cl.: G01N 21/51, G01N 15/02, G01N 21/47

(54) **VERFAHREN ZUR PARTIKELFORMBESTIMMUNG**
METHOD FOR DETERMINING A PARTICLE SHAPE
PROCÉDÉ DE DÉTERMINATION DE LA FORME DES PARTICULES

(30) Priorität: 01.07.2014 DE 102014109166
(43) Veröffentlichungstag der Anmeldung: 10.05.2017
(73) Patentinhaber: parsum Gesellschaft für Partikel-, Strömungs- und Umweltmesstechnik mbH, 09126 Chemnitz (DE)
(72) Erfinder: DIETRICH, Stefan, 09128 Chemnitz (DE); PETRAK, Dieter, 99425 Weimar (DE); KÖHLER, Michael, 09353 Oberlungwitz (DE); ECKARDT, Günter, 09116 Chemnitz (DE)
(74) Vertreter: Steiniger, Carmen
(86) Internationale Anmeldenummer: PCT/IB2015/054857
(87) Internationale Veröffentlichungsnummer: WO 2016/001816

(56) Entgegenhaltungen:
- SILVA ANA F T ET AL: "Particle sizing measurements in pharmaceutical applications: Comparison of in-process methods versus off-line methods", EUROPEAN JOURNAL OF PHARMACEUTICS AND BIOPHARMACEUTICS, Bd. 85, Nr. 3, 1. November 2013 (2013-11-01), Seiten 1006-1018, XP028790984, ISSN: 0939-6411, DOI: 10.1016/J.EJPB.2013.03.032
- LI M ET AL: "Determination of non-spherical particle size distribution from chord length measurements. Part 1: Theoretical analysis", CHEMICAL ENGINEERING SCIENCE, OXFORD, GB, Bd. 60, Nr. 12, 1. Juni 2005 (2005-06-01), Seiten 3251-3265, XP027646280, ISSN: 0009-2509 [gefunden am 2005-06-01]
- MINGZHONG LI ET AL: "Obtaining Particle Size Distribution from Chord Length Measurements", PARTICLE & PARTICLE SYSTEMS CHARACTERIZATION, Bd. 23, Nr. 2, 1. August 2006 (2006-08-01) , Seiten 170-174, XP055213011, ISSN: 0934-0866, DOI: 10.1002/ppsc.200601026

## Beschreibung

Die vorliegende Erfindung betrifft ein Verfahren zur Bestimmung einer Partikelform von in einer Verteilung vorliegenden Partikeln.

Neben der Partikelgröße ist die Partikelform eine wichtige Kenngröße in der Partikeltechnik, die zur Charakterisierung der in verfahrenstechnischen Prozessen enthaltenen Partikel eingesetzt wird. Die Partikelform beeinflusst die Schüttdichte, die Porosität, die Fließfähigkeit, die Wechselwirkung mit Strömungen und andere Pulvereigenschaften. Zur Bestimmung der Partikelform werden kamerabasierte, beugungsbasierte oder streulichtbasierte Verfahren eingesetzt. Für die Beschreibung der Partikelform dienen Formfaktoren, wie z. B. die Kreisförmigkeit.

Bei kamerabasierten Verfahren werden die Partikel als zweidimensionale Bilder auf den Sensor der Kamera abgebildet. Ist der Sensor eine CCD-Matrix oder ein CMOS-Bildsensor wird eine entsprechende Bildauswertesoftware zur Partikelformbestimmung verwendet. In der Druckschrift DE 198 02 141 C1 ist eine Lösung mit Matrixkamera und in der Druckschrift EP 1 972 921 A1 ist eine Lösung mit zwei Kameras beschrieben. Ist der Sensor eine CCD-Zeile, wird die abgebildete Partikelfläche aus den gemessenen Sehnenlängen bei bekannter Partikelgeschwindigkeit zusammengesetzt. Entsprechende Vorrichtungen und Verfahren sind in den Druckschriften DE 10 2009 056 503 A1 (mit Sensorzeile), DE 10 2004 056 520 A1 (mit CCD-Zeile), DE 43 13 688 A1 (mit CCD-Zeile), DE 41 19 240 C2 (mit CCD-Zeile), DD 278 859 A1 (mit CCD-Liniensensor), DD 260 764 A1 (mit CCD-Zeilensensor) und DD 232760 A1 (mit einzeiliger Fernsehkamera) aufgeführt. Die Druckschrift DE 196 28 348 C1 schlägt eine Bestimmung der Partikelform mit einer Zeile aus einzelnen Lichtwellenleitern vor, wobei eine zweite Lichtwellenleiterzeile zur Ermittlung der Geschwindigkeit eingesetzt wird.

Beugungsbasierte Verfahren nutzen die Abhängigkeit des Partikelbeugungsbildes von der Partikelform. Dabei werden die Partikel mit kohärentem Licht bestrahlt und die Lichtintensitätsverteilung des Beugungsbildes mit einem geeigneten Empfänger gemessen.

Die Verteilung der Lichtintensität im Beugungsbild hängt von der Form der Partikel ab.

Lösungen hierfür enthalten die Druckschriften DE 694 06 683 T2 (mit Ringsensor) und DE 102 18 413 B4.

Die Druckschrift DE 41 29 105 A1 offenbart eine Bestimmung der Partikelform mit Hilfe einer Streulichtmessung.

Bei den aus dem Stand der Technik bekannten Verfahren zur Partikelformbestimmung sind also entweder optisch das gesamte Partikelabbild oder zumindest mehrere Sehnen pro Partikel zu erfassen und auszuwerten. Der damit verbundene mess- und auswertetechnische Aufwand ist relativ hoch.

Es ist daher die Aufgabe der vorliegenden Erfindung, ein Verfahren zur Bestimmung einer Partikelform von in einer Verteilung vorliegenden Partikeln mit verringertem mess- und auswertetechnischen Aufwand zur Verfügung zu stellen.

Diese Aufgabe wird durch ein Verfahren der oben genannten Gattung gelöst, bei dem die Anzahl der Partikel erfasst wird; von jedem der Partikel eine Partikelsehnenlänge (x) als Maß für eine Partikelgröße gemessen und gespeichert wird; aus den pro Partikel gemessenen Partikelsehnenlängen wenigstens eine erste und eine zweite Verteilung der Partikelgröße erstellt werden, wobei die erste Verteilung auf einer ersten Mengenart und die zweite Verteilung auf einer zweiten Mengenart basiert, und wobei die erste und die zweite Mengenart unterschiedlichen Potenzen der Partikelgröße entsprechende Mengenarten sind; ein einer Summen- oder Dichteverteilung entsprechender erster Verteilungsparameter der ersten Verteilung zu einem einer anderen oder der gleichen Summen- oder Dichteverteilung entsprechenden zweiten Verteilungsparameter der zweiten Verteilung in ein Verteilungsparameterverhältnis gesetzt wird; und aus dem Verteilungsparameterverhältnis ein Aspektverhältnis als ein die Partikelform der Partikel charakterisierender Wert bestimmt wird.

Das erfindungsgemäße Verfahren geht also von der Messung von Sehnenlängen der zu charakterisierenden Partikel als Maß für deren Partikelgröße aus. Pro Partikel muss bei der vorliegenden Erfindung nur eine einzige Sehnenlänge erfasst und nachfolgend ausgewertet werden. Die Sehnenlänge von sich bewegenden Partikeln kann beispielsweise mit einer Ein-Punkt-Abtastung ermittelt werden.

Die Ein-Punkt-Abtastung kann bei dem erfindungsgemäßen Verfahren beispielsweise mit Hilfe eines fokussierten Strahls erfolgen, wie es in den Druckschriften DE 600 29 878 T2 oder US 4,871,251 erläutert ist. In einer anderen Variante der Ein-Punkt-Abtastung, die beispielsweise in der Druckschrift DE 196 28 348 C1 angegeben ist, wird das zweidimensionale Schattenbild eines sich bewegenden Partikels mit Hilfe eines Lichtwellenleiters abgetastet.

Bei dem erfindungsgemäßen Verfahren kann die Ein-Punkt-Abtastung in einer Messsonde zur in-line-Bestimmung der Größe von bewegten Partikeln in transparenten Medien durchgeführt werden.

Aufgrund der variierenden räumlichen Position des jeweils in dem erfindungsgemäßen Verfahren hinsichtlich seiner Form zu charakterisierenden Partikels bezüglich der festen Position einer abtastenden optischen Einrichtung, wie beispielsweise eines abtastenden Lichtwellenleiters, ist die gemessene Sehnenlänge einer unterschiedlichen Sehnenlänge des Partikels zugeordnet. Für ein mit dem erfindungsgemäßen Verfahren im Hinblick auf die Partikelform zu charakterisierendes Partikelkollektiv aus mehreren Partikeln erhält man damit bei dem erfindungsgemäßen Verfahren zunächst als Messzwischenergebnis eine Sehnenlängen-Häufigkeitsverteilung.

Bei der vorliegenden Erfindung wird aus den gemessenen Partikelsehnenlängen zunächst eine erste, auf einer ersten Mengenart basierende Verteilung erstellt. Diese erste Verteilung kann beispielsweise, aber nicht ausschließlich, eine sogenannte q₀(x)-Dichteverteilung bzw. q₀(x)-Anzahlverteilungsdichte oder eine Q₀(x)-Summenverteilung bzw. Q₀(x)-Anzahlverteilungssumme sein, in welcher die Häufigkeit der gemessenen Sehnenlängen nach ihrer Anzahl angegeben und/oder dargestellt ist. Des Weiteren wird bei dem erfindungsgemäßen Verfahren aus den gemessenen Sehnenlängen eine zweite, auf einer zweiten Mengenart basierende Verteilung erstellt. Diese zweite Verteilung kann beispielsweise, aber nicht ausschließlich, eine sogenannte q₃(x)-Dichteverteilung bzw. q₃(x)-Volumenverteilungsdichte oder eine Q₃(x)-Summenverteilung bzw. Q₃(x)-Volumenverteilungssumme sein, in der die Häufigkeit der gemessenen Sehnenlängen nach den ermittelten Volumina angegeben und/oder dargestellt ist.

Daraufhin werden bei dem erfindungsgemäßen Verfahren aus den beiden Verteilungen charakteristische, einer bestimmten Summen- oder Dichteverteilung entsprechende Verteilungsparameter entnommen und zueinander ins Verhältnis gesetzt. Zu den Verteilungsparametern zählen bei dem erfindungsgemäßen Verfahren auch aus der Verteilung entnehmbare Absolutwerte, wie beispielsweise Maximalwerte. So können beispielsweise, aber nicht ausschließlich, der Q₃(x)-Summenverteilung der Medianwert X_{50,3} und der Q₀(x)-Summenverteilung der Medianwert x_{50,0} entnommen werden und diese Medianwerte zueinander ins Verhältnis, das in der Erfindung als allgemein, also unabhängig von den zueinander ins Verhältnis gesetzten Verteilungsparametern, als Verteilungsparameterverhältnis bezeichnet wird, gesetzt werden.

Bei der vorliegenden Erfindung ist die Potenz der zur Ermittlung der ersten und zweiten Verteilung verwendeten Mengenarten unterschiedlich. Die jeweils verwendeten Potenzen der Mengenarten können beispielsweise die bekannten natürlichen Potenzen, wie 0, 1, 2 oder 3, sein, wobei die Potenz 0 eine Häufigkeits- oder Anzahlverteilung, die Potenz 1 eine Längenverteilung, die Potenz 2 eine Flächen- oder Oberflächenverteilung und die Potenz 3 eine Massen- oder Volumenverteilung wiedergibt. Bei dem erfindungsgemäßen Verfahren können jedoch auch gebrochene Potenzen der Mengenarten und/oder Potenzen der Mengenarten, die größer als die Potenz 3 sind, zur Ermittlung der ersten und zweiten Verteilung verwendet werden.

Bei der vorliegenden Erfindung hat sich gezeigt, dass zwischen der Sehnenlängen-Häufigkeitsverteilung und der Partikelform eine Korrelation besteht. Als besonders überraschend hat sich jedoch bei der vorliegenden Erfindung herausgestellt, dass aus dem Verteilungsparameterverhältnis auf die Partikelform geschlossen werden kann, was in dem erfindungsgemäßen Verfahren zur Bestimmung der Partikelform genutzt wird. Dabei dient das erfindungsgemäße Verfahren der Bestimmung der Partikelform für das gesamte Partikelkollektiv und nicht für jedes einzelne Partikel des Partikelkollektivs. Die Partikelform für das Partikelkollektiv ist also die in dem Partikelkollektiv vorherrschende Partikelform.

Bei dem erfindungsgemäßen Verfahren ist es gleich, ob zur Ermittlung des Verteilungsparameterverhältnisses die Verteilungsparameter, die auf der Mengenart mit der höheren Potenz basieren, zu den Verteilungsparametern, die auf der Mengenart mit der niedrigeren Potenz basieren, zueinander ins Verhältnis gesetzt werden oder umgekehrt zur Ermittlung des Verteilungsparameterverhältnisses die Verteilungsparameter, die auf der Mengenart mit der niedrigeren Potenz basieren, zu den Verteilungsparametern, die auf der Mengenart mit der höheren Potenz basieren, zueinander ins Verhältnis gesetzt werden.

Hinsichtlich der zu bestimmenden Partikelform wird bei der vorliegenden Erfindung zwischen einer Kugelform und einer ellipsentonnigen Partikelform unterschieden. Die ellipsentonnige Partikelform wird dabei stellvertretend für eine längliche Partikelform betrachtet. Die ellipsentonnige Partikelform, die durch die Form eines ellipsenförmigen Schattenbildes darstellbar ist, wird durch das Verhältnis von Hauptachse und Nebenachse der Ellipse charakterisiert. Unter die ellipsentonnige Partikelform werden bei dem erfindungsgemäßen Verfahren nicht nur Partikelformen mit reinem ellipsenförmigen Schattenbild, sondern auch stäbchenförmige oder sonstige im Wesentlichen zylinderförmige oder im Wesentlichen in ihrem Schattenbild ellipsenförmige Partikelformen subsummiert. Für ein kugelförmiges Partikel mit einem kreisförmigen Schattenbild gibt es eine analytische Lösung für die Sehnenhäufigkeitsverteilung, während für ein ellipsentonniges Partikel mit einem ellipsenförmigen Schattenbild für die Sehnenhäufigkeitsverteilung eine numerische Lösung (Paul A. Langston, Trevor F. Jones "Non-Spherical 2-Dimensional Particle Size Analysis from Chord Measurements using Bayes' Theorem", Particle & Particle Systems Characterization, Volume 18, Issue 1, Seiten 12-21, Febr. 2001) vorliegt.

Das in dem erfindungsgemäßen Verfahren ermittelte Verteilungsparameterverhältnis ist ein vorzugsweise dimensionsloser Parameter, anhand dessen besonders einfach ein in der Partikelverteilung vorherrschendes Aspektverhältnis und damit die vorherrschende Partikelform bestimmt werden kann. Das Aspektverhältnis stellt ein Verhältnis von in unterschiedlichen Ausrichtungen des gemessenen Partikels bzw. der gemessenen Partikel erfassten Sehnenlängen, vorzugsweise Partikelachsen, dar. Bei dem Aspektverhältnis handelt es sich beispielsweise, aber nicht ausschließlich, um das Verhältnis zwischen der langen Hauptachse eines ellipsenförmigen Schattenbildes eines Partikels und der kurzen Nebenachse des ellipsenförmigen Schattenbildes des Partikels. Bei überwiegend kugelförmigen Partikeln strebt das Aspektverhältnis den Wert 1 an.

Bei der vorliegenden Erfindung kann jedoch als Aspektverhältnis ein Verhältnis von kurzen zu langen Achsen der Partikel verwendet werden. Es ist lediglich erforderlich, das bei der jeweiligen Berechnung eine konstante Verfahrensweise, also lang zu kurz oder kurz zu lang, zur Bestimmung des Aspektverhältnisses angewendet wird. Mit dem Begriff Aspektverhältnis wird also bei der vorliegenden Erfindung auch das sonst als Elongation bezeichnete Größenverhältnis umfasst.

Das erfindungsgemäße Verfahren weist eine besonders hohe Genauigkeit insbesondere in solchen Anwendungsfällen auf, in welchen die in der Verteilung vorliegenden Partikel nahezu gleich groß sind, also in denen die zu charakterisierenden Partikel in einer etwa monodispersen Verteilung vorliegen. Das erfindungsgemäße Verfahren ist jedoch auch dann anwendbar, wenn unterschiedlich große Partikel in der Verteilung vorliegen. Hierbei ist lediglich zu beachten, dass die Unsicherheit des in dem erfindungsgemäßen Verfahren ermittelten Aspektverhältnisses mit größeren Partikelgrößenunterschieden der Partikel zunimmt.

Gemäß einer bevorzugten Ausführungsform des erfindungsgemäßen Verfahrens gibt, wie bereits oben erwähnt, die erste Mengenart eine Anzahlsummen- oder Anzahldichteverteilung, also eine Q₀(x)-Verteilung oder eine q₀(x)-Verteilung, und die zweite Mengenart eine Volumensummenverteilung Q₃(x) oder Volumendichteverteilung q₃(x) an. Es ist aber auch möglich, dass umgekehrt die erste Mengenart eine Volumensummenverteilung Q₃(x) oder Volumendichteverteilung q₃(x) angibt, während die zweite Mengenart eine Anzahlsummen- oder Anzahldichteverteilung, also eine Q₀(x)-Verteilung oder eine q₀(x)-Verteilung, angibt. Diese Mengenarten sind leicht ermittelbar und/oder liegen dem Anwender des erfindungsgemäßen Verfahrens bereits aufgrund einer vorherigen Partikelgrößenbestimmung schon vor und können somit einfach zur Partikelformbestimmung gemäß der vorliegenden Erfindung weiter verwendet werden. Wie bereits oben erläutert, ist das erfindungsgemäße Verfahren jedoch nicht auf die Anwendung dieser speziellen Verteilungen beschränkt.

In einer vorteilhaften Variante des erfindungsgemäßen Verfahrens ist die erste Verteilung eine Anzahlsummenverteilung und der erste Verteilungsparameter ein Feinheitsmerkmal, bei dem die Anzahlsummenverteilung einen vorbestimmten Prozentwert annimmt; und ist die zweite Verteilung eine Volumensummenverteilung und der zweite Verteilungsparameter ein Feinheitsmerkmal, bei dem die Volumensummenverteilung den vorbestimmten Prozentwert annimmt. Umgekehrt ist es bei dieser Ausführungsform der Erfindung auch möglich, dass die erste Verteilung eine Volumensummenverteilung ist und der erste Verteilungsparameter ein Feinheitsmerkmal ist, bei dem die Volumensummenverteilung den vorbestimmten Prozentwert annimmt; und dass die zweite Verteilung eine Anzahlsummenverteilung ist und der zweite Verteilungsparameter ein Feinheitsmerkmal ist, bei dem die Anzahlsummenverteilung einen vorbestimmten Prozentwert annimmt. Der für das Feinheitsmerkmal vorbestimmte Prozentwert ist hierbei variabel von 0 bis 100 %.

In einer speziellen Ausgestaltung dieser Variante des erfindungsgemäßen Verfahrens ist das Feinheitsmerkmal ein Medianwert, also ein Mittelwert der Volumensummen- oder Anzahlsummenverteilung, bei dem 50 % der Werte der jeweiligen Verteilung kleiner und 50 % größer als dieser Mittelwert sind. So kann hier beispielsweise als erster Verteilungsparameter der Medianwert x_{50,0}, bei dem die Anzahlverteilungssumme den Wert 50 % annimmt, und als zweiter Verteilungsparameter der Medianwert x_{50,3}, bei dem die Volumenverteilungssumme den Wert 50 % annimmt, verwendet werden.

In einer alternativen, ebenso vorteilhaften Ausbildung des erfindungsgemäßen Verfahrens ist die erste Verteilung eine Anzahldichteverteilung und der erste Verteilungsparameter ein Modalwert, bei dem die Anzahldichteverteilung ein Maximum annimmt, und ist die zweite Verteilung eine Volumendichteverteilung und der zweite Verteilungsparameter ein Modalwert, bei dem die Volumendichteverteilung ein Maximum annimmt. Umgekehrt ist es bei dieser Ausführung der Erfindung auch möglich, dass die erste Verteilung eine Volumendichteverteilung ist und der erste Verteilungsparameter ein Modalwert ist, bei dem die Volumendichteverteilung ein Maximum annimmt, und die zweite Verteilung eine Anzahldichteverteilung ist und der zweite Verteilungsparameter ein Modalwert ist, bei dem die Anzahldichteverteilung ein Maximum annimmt. Bei dieser Ausbildung des erfindungsgemäßen Verfahrens kann beispielsweise der erste Verteilungsparameter der Modalwert x_{mod},_{(q0)} sein, bei dem die Anzahldichteverteilung ein Maximum besitzt, während der zweite Verteilungsparameter der Modalwert x_{mod,(q3)} sein kann, bei dem die Volumendichteverteilung ein Maximum besitzt, oder umgekehrt.

In einem anderen, ebenfalls vorteilhaften Ausführungsbeispiel des erfindungsgemäßen Verfahrens ist vorgesehen, dass die erste Verteilung eine Anzahldichteverteilung ist und die zweite Verteilung ebenfalls eine Anzahldichteverteilung ist, und der erste Verteilungsparameter ein Modalwert ist, bei dem die Anzahldichteverteilung ein Maximum annimmt, und der zweite Verteilungsparameter die größte gemessene Sehnenlänge der Anzahldichteverteilung ist. Umgekehrt ist es bei dieser Ausführung der Erfindung auch möglich, dass der erste Verteilungsparameter die größte gemessene Sehnenlänge der Anzahldichteverteilung ist, und der zweite Verteilungsparameter ein Modalwert ist, bei dem die Anzahldichteverteilung ein Maximum annimmt. In diesem Ausführungsbeispiel der Erfindung kann als erster Verteilungsparameter beispielsweise der Modalwert x_{mod,(q0)}, bei dem die Anzahldichteverteilung ein Maximum besitzt, und als zweiter Verteilungsparameter xₘₐₓ, also die größte in der Verteilung vorkommende Sehnenlänge, oder umgekehrt, verwendet werden.

Das erfindungsgemäße Verfahren eignet sich beispielsweise zum Erfassen einer Partikelformänderung während einer Beschichtung der Partikel.

Bevorzugte Ausführungsformen der vorliegenden Erfindung werden im Folgenden anhand von Figuren näher erläutert, wobei
- Figur 1: ein Diagramm zeigt, in dem anhand eines Beispiels das sich relativ zu dem Verhältnis der Medianwerte aus Volumensummenverteilung und Anzahlsummenverteilung ändernde Aspektverhältnis von Partikeln dargestellt ist;
- Figur 2: ein Diagramm zeigt, in dem anhand eines Beispiels das sich relativ zu dem Verhältnis der Modalwerte aus Volumendichteverteilung und Anzahldichteverteilung ändernde Aspektverhältnis von Partikeln dargestellt ist; und
- Figur 3: ein Diagramm zeigt, in dem anhand eines Beispiels das sich relativ zu dem Verhältnis des Modalwertes aus Anzahldichteverteilung und größter vorkommender Sehnenlänge ändernde Aspektverhältnis von Partikeln dargestellt ist.

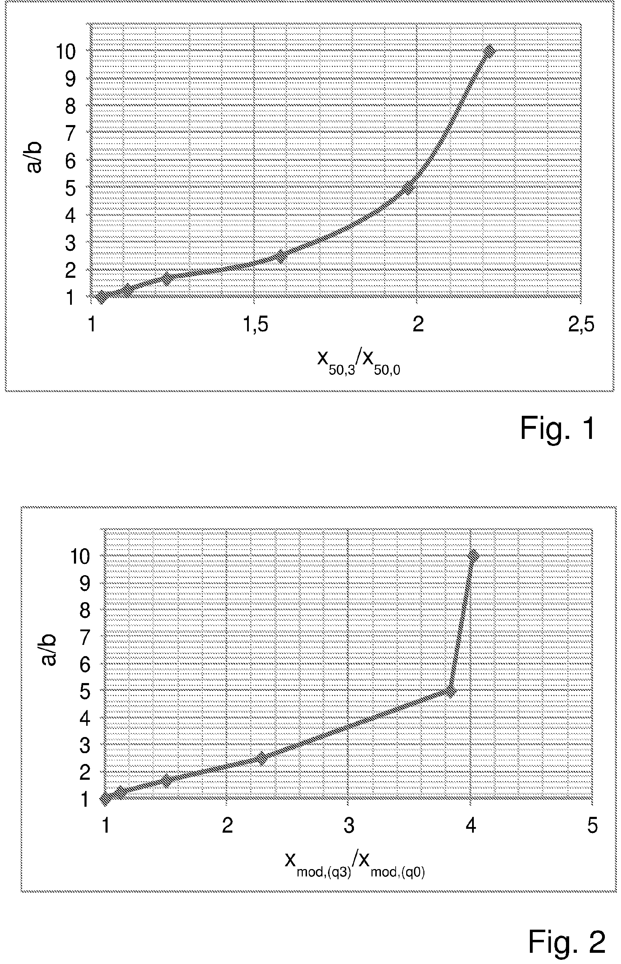

Figur 1 zeigt ein Diagramm, bei dem anhand eines Beispiels auf der x-Achse das Verhältnis des Medianwertes x_{50,3} der Volumensummenverteilung zu dem Medianwert x_{50,0} der Anzahlsummenverteilung aufgetragen ist, während auf der y-Achse das Aspektverhältnis a/b, also das Größenverhältnis zwischen langer Partikelachse a zu kurzer Partikelachse b, einer Verteilung von ellipsentonnigen Partikeln aufgetragen ist. Man erkennt an dieser Darstellung, dass dann, wenn sich das Verhältnis x_{50,3}/x_{50,0} dem Wert 1 annähert, auch das Verhältnis a/b gegen 1 tendiert, also die Partikelform sich der Kugelform annähert. Je größer das Verhältnis x_{50,3/x50,0}, umso länglicher ist die Partikelform.

Figur 2 zeigt ein Diagramm, bei dem anhand eines Beispiels auf der x-Achse das Verhältnis des Modalwertes x_{mod,(q3)} der Volumendichteverteilung zu dem Modalwert x_{mod,(q0)} der Anzahldichteverteilung aufgetragen ist, während auf der y-Achse das Aspektverhältnis a/b, also das Größenverhältnis zwischen langer Partikelachse a zu kurzer Partikelachse b, einer Verteilung von ellipsentonnigen Partikeln aufgetragen ist. Man erkennt an dieser Darstellung, dass dann, wenn sich das Verhältnis x_{mod,(q3)}/x_{mod,(q0)} dem Wert 1 annähert, auch das Verhältnis a/b gegen 1 tendiert, also sich die Partikelform der Kugelform annähert. Je größer das Verhältnis x_{mod,(q3)}/x_{mod,(q0)}, umso länglicher ist die Partikelform.

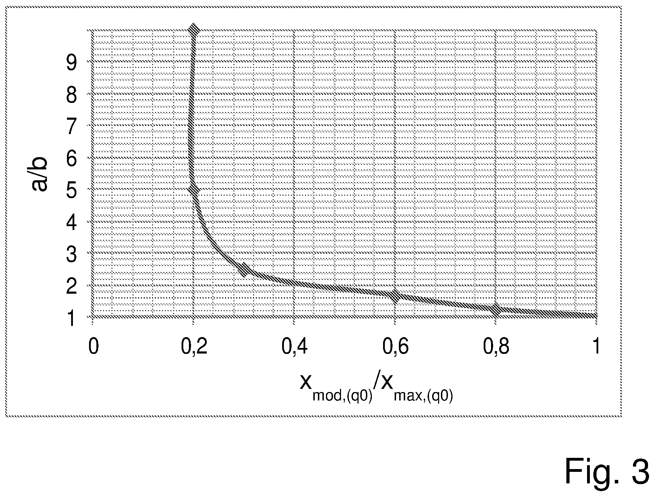

Figur 3 zeigt ein Diagramm, in dem anhand eines Beispiels auf der x-Achse das Verhältnis des Modalwertes x_{mod,(q0)} der Anzahldichteverteilung zu der größten vorkommenden Sehnenlänge xₘₐₓ aufgetragen ist, während auf der y-Achse das Aspektverhältnis a/b, also das Größenverhältnis zwischen langer Partikelachse a zu kurzer Partikelachse b, einer Verteilung von ellipsentonnigen Partikeln aufgetragen ist. Auch hier ist erkennbar, dass dann, wenn sich das Verhältnis x_{mod,(q0)/}xₘₐₓ dem Wert 1 annähert, auch das Verhältnis a/b gegen 1 tendiert, also sich die Partikelform der Kugelform annähert. Je geringer das Verhältnis x_{mod,(q0)}/xₘₐₓ, umso länglicher ist die Partikelform.

Die in den Figuren 1 bis 3 angegebenen Verteilungsparameter x_{50,3}, x_{50,0}, x_{mod,(q3)}, x_{mod,(q0)} und xₘₐₓ, werden anhand gemessener Partikelsehnenlängen, die mittels der Ein-Punkt-Abtastung erfasst werden, ermittelt. Wie oben beispielhaft erläutert, kann aus der gemessenen Sehnenlängenverteilung mit Hilfe der errechneten dimensionslosen Parameter x_{50,3}/x_{50,0}, x_{mod,(q3)}/x_{mod,(q0)} bzw_{.} x_{mod,(q0)}/xₘₐₓ die Partikelform des Partikelkollektivs mit Hilfe des Aspektverhältnisses charakterisiert werden. Damit kann während der Messzeit eine Partikelformänderung von einer ellipsentonnigen Partikelform in eine Kugelform oder auch umgekehrt festgestellt werden. Entsprechend kann das erfindungsgemäße Verfahren beispielsweise bei Verfahren zum Einsatz kommen, in welchen kugelförmige oder ellipsentonnige Partikel beschichtet werden. Besonders zuverlässige Messergebnisse werden dabei dann erzielt, wenn die Partikel in einer nahezu bzw. angenähert monodispersen Startverteilung vorliegen.

Wie es den obigen Ausführungen entnehmbar ist, können anstelle der in den Figuren verwendeten Verteilungsparameter auch zahlreiche weitere, die jeweilige Verteilung charakterisierende Verteilungsparameter bei unterschiedlichen Ausführungsformen des erfindungsgemäßen Verfahrens zum Einsatz kommen.

Ferner ist zu beachten, dass die in den Figuren enthaltenen Ausführungsformen der Erfindung nur beispielhaft angeführt sind. So können in weiteren Ausführungsformen der Erfindung beispielsweise auch zu den oben angegebenen Verhältnissen invertierte Verhältnisse, wie beispielsweise das Verhältnis des Medianwertes x_{50,0} der Anzahlsummenverteilung zu dem Medianwert x_{50,3} der Volumensummenverteilung und/oder das Verhältnis des Modalwertes x_{mod,(q0)} der Anzahldichteverteilung zu dem Modalwert x_{mod,(q3)} der Volumendichteverteilung, rechnerisch angegeben und ausgewertet werden und/oder in der jeweiligen grafischen Darstellung auf der x- oder der y-Achse aufgetragen sein.

## Patentansprüche

1. Verfahren zur Bestimmung einer Partikelform von in einer Verteilung vorliegenden Partikeln, **dadurch gekennzeichnet,**
**dass** die Anzahl der Partikel erfasst wird;
von jedem der Partikel eine Partikelsehnenlänge gemessen und gespeichert wird; aus den gemessenen Partikelsehnenlängen wenigstens eine erste und eine zweite Verteilung erstellt werden, wobei die erste Verteilung auf einer ersten Mengenart und die zweite Verteilung auf einer zweiten Mengenart basiert, und wobei die Potenz der zur Ermittlung der ersten und der zweiten Verteilung verwendeten Mengenarten unterschiedlich ist;
ein einer Summen- oder Dichteverteilung entsprechender erster Verteilungsparameter der ersten Verteilung zu einem einer Summen- oder Dichteverteilung entsprechenden zweiten Verteilungsparameter der zweiten Verteilung in ein Verteilungsparameterverhältnis gesetzt wird; und
aus dem Verteilungsparameterverhältnis ein Aspektverhältnis als ein die Partikelform der Partikel charakterisierender Wert bestimmt wird.

2. Verfahren nach Anspruch 1, **dadurch gekennzeichnet, dass** die erste Verteilung eine q₀(x)-Dichteverteilung und die zweite Verteilung eine q₃(x)-Dichteverteilung oder umgekehrt ist.

3. Verfahren nach Anspruch 1 oder 2, **dadurch gekennzeichnet, dass** die erste Verteilung eine Q₀(x)-Summenverteilung ist und der erste Verteilungsparameter ein Feinheitsmerkmal ist, bei dem die Anzahlsummenverteilung einen vorbestimmten Prozentwert annimmt; und die zweite Verteilung eine Q₃(x)-Summenverteilung ist und der zweite Verteilungsparameter ein Feinheitsmerkmal ist, bei dem die Q₃(x)-Summenverteilung den vorbestimmten Prozentwert annimmt, oder umgekehrt.

4. Verfahren nach Anspruch 3, **dadurch gekennzeichnet, dass** das Feinheitsmerkmal ein Medianwert ist.

5. Verfahren nach Anspruch 1 oder 2, **dadurch gekennzeichnet, dass** die erste Verteilung eine q₀(x)-Dichteverteilung ist und der erste Verteilungsparameter ein Modalwert ist, bei dem die q₀(x)-Dichteverteilung ein Maximum annimmt, und die zweite Verteilung eine q₃(x)-Dichteverteilung ist und der zweite Verteilungsparameter ein Modalwert ist, bei dem die q₃(x)-Dichteverteilung ein Maximum annimmt, oder umgekehrt.

6. Verfahren nach wenigstens einem der vorhergehenden Ansprüche, **dadurch gekennzeichnet, dass** mit dem Verfahren eine Partikelformänderung bei einer Beschichtung der Partikel erfasst wird.

## Claims

1. Method for determining a particle shape of particles provided in a distribution, **characterized in that**
the number of particles is detected;
a particle chord length is measured and stored for each of the particles;
at least one first and one second distribution is generated from the measured particle chord lengths, wherein the first distribution is based on
a first quantity type and the second distribution is based on a second quantity type, and wherein the potency of the quantity types used for determining the first and the second distribution is different;
a first distribution parameter, corresponding to a cumulative or density distribution, of the first distribution is set into a distribution parameter ratio with a second distribution parameter, corresponding to a cumulative or density distribution, of the second distribution; and
an aspect ratio is determined from the distribution parameter ratio as a value which characterizes the particle shape of the particles.

2. Method according to claim 1, **characterized in that** the first distribution is a q₀(x) density distribution and the second distribution is a q₃(x) density distribution or vice versa.

3. Method according to claim 1 or 2, **characterized in that** the first distribution is a Q₀(x) cumulative distribution and the first distribution parameter is a fineness feature, at which the cumulative number distribution assumes a predetermined percentage value; and the second distribution is a Q₃(x) cumulative distribution and the second distribution parameter is a fineness feature, at which the Q₃(x) cumulative distribution assumes the predetermined percentage value or vice versa.

4. Method according to claim 3, **characterized in that** the fineness feature is a median value.

5. Method according to claim 1 or 2, **characterized in that** the first distribution is a q₀(x) density distribution and the first distribution parameter is a modal value, at which the q₀(x) density distribution assumes a maximum, and the second distribution is a q₃(x) density distribution and the second distribution parameter is a modal value, at which the q₃(x) density distribution assumes a maximum or vice versa.

6. Method according to at least one of the preceding claims, **characterized in that** when coating the particles, a change of the particle shape is determined with the method.

## Revendications

1. Procédé pour déterminer une forme de particule de particules présentes dans une distribution, **caractérisé en ce que**
le nombre des particules est détecté ;
la longueur de corde de chacune des particules est mesurée et mémorisée ;
au moins une première et une seconde distribution sont générées des longueurs de corde de particule mesurées, la première distribution étant basée sur un premier type de quantité et la seconde distribution sur un second type de quantité, et les puissances des types de quantité utilisées pour établir la première et la seconde distribution étant différentes;
un premier paramètre de distribution de la première distribution, ce paramètre correspondant à une distribution de somme ou de densité, est mis en un rapport de paramètres de distribution à un second paramètre de distribution de la seconde distribution, ce paramètre correspondant à une distribution de somme ou de densité; et
à partir du rapport de paramètres de distribution un rapport d'aspect en tant que valeur caractérisant la forme de particule des particules est déterminé.

2. Procédé selon la revendication 1, **caractérisé en ce que** la première distribution est une distribution de densité q₀(x) et la deuxième distribution est une distribution de densité q₃(x), ou vice versa.

3. Procédé selon la revendication 1 ou 2, **caractérisé en ce que** la première distribution est une distribution de somme Q₀(x) et le premier paramètre de distribution est une caractéristique de finesse, la distribution de somme de quantité prenant une valeur de pourcentage prédéterminée; et la deuxième distribution est une distribution de somme Q₃(x) et le deuxième paramètre de distribution est une caractéristique de finesse, la distribution de somme Q₃(x) prenant une valeur de pourcentage prédéterminée, ou vice versa.

4. Procédé selon la revendication 3, **caractérisé en ce que** la caractéristique de finesse est une valeur médiane.

5. Procédé selon la revendication 1 ou 2, **caractérisé en ce que** la première distribution est une distribution de densité q₀(x) et le premier paramètre de distribution est une valeur modale pour laquelle la distribution de densité q₀(x) prend un maximum ; et la deuxième distribution est une distribution de densité q₃(x) et le deuxième paramètre de distribution est une valeur modal pour laquelle la distribution de densité q₃(x) prend un maximum, ou vice versa.

6. Procédé selon au moins l'une des revendications précédentes, **caractérisé en ce que** le procédé détecte un changement de forme de particule pendant un revêtement des particules.
